# EUROPÄISCHE PATENTANMELDUNG

(11) **EP 2 631 620 A2**
(43) Veröffentlichungstag der Anmeldung: **28.08.2013**
(21) Anmeldenummer: 13405003.8
(22) Anmeldetag: 21.01.2013
(51) Int. Cl.: G01L 1/12

(54) **Verfahren und Messanordung zur Messung von mechanischen Spannungen in ferromagnetischen Werkstücken**

(30) Priorität: 23.02.2012 CH 2372012
(71) Anmelder: Polycontact AG, 7007 Chur (CH)
(72) Erfinder: Lanter, Josua, 7000 Chur (CH)
(74) Vertreter: Bohest AG

(57) **Zusammenfassung**

Es ist ein Verfahren zur Messung von mechanischen Spannungen in ferromagnetischen Werkstücken (1) beschrieben, bei dem einem ferromagnetischen Werkstück ein Magnetfeld aufgeprägt und eine Magnetfeldgrösse gemessen und hinsichtlich der mechanischen Spannung ausgewertet wird. Dabei werden wenigstens zwei Erreger des Magnetfelds (2, 3) derart entlang der Längserstreckung des Werkstücks (1) angeordnet, dass ein Abschnitt des Werkstücks (1) sich zwischen den beiden Erregern des Magnetfelds (2, 3) befindet. Ein richtungsabhängiger Magnetfeldsensor (5) wird an einer Position entlang der Längserstreckung des Werkstücks (1) angeordnet, die etwa auf halber Strecke zwischen den beiden Erregern des Magnetfelds (2, 3) liegt. Mit dem richtungsabhängigen Magnetfeldsensor (5) wird die Veränderung der Lage und/oder der Richtung einer Trennlinie (4) zwischen Nord- und Südpol des aufgeprägten Magnetfelds bestimmt und ausgewertet. Es sind auch eine Messanordung für die Durchführung des erfindungsgemässen Verfahrens sowie Anwendungen des Verfahrens beschrieben.

## Beschreibung

Die Erfindung betrifft ein Verfahren zur Messung von mechanischen Spannungen bedingt durch Torsions-, Scher-, Biege-, Schub-, Zug- und/oder Druckkräfte in ferromagnetischen Werkstücken gemäss dem Oberbegriff des Patentanspruchs 1. Die Erfindung betrifft auch die Verwendung des erfindungsgemässen Verfahrens und eine Messanordnung für die Durchführung des erfindungsgemässen Verfahrens.

Für die Untersuchung, Charakterisierung und Überwachung der Spannungszustände von ferromagnetischen Werkstücken, beispielsweise Stahl, kommen magnetoelastische Messverfahren zum Einsatz, welche ganz allgemein die Abhängigkeiten zwischen mechanischen und magnetischen Eigenschaften von ferromagnetischen Werkstoffen nutzen. Bei der mechanischen Belastung eines ferromagnetischen Werkstücks, wie sie beispielsweise bei der Einwirkung von Torsions-, Scher-, Biege-, Schub-, Zug- und/oder Druckkräften auftritt, und dessen erzwungener geometrischen Deformation ändern sich seine magnetischen Eigenschaften und magnetischen Parameter.

Bei der Einwirkung von äusseren Kräften auf Stahl verändern sich die Kennwerte der Ummagnetisierungskennlinie. Mit zunehmender Zugspannung wird beispielsweise die Hystereseschleife flacher; die Steigung der Hystereseschleife nimmt somit ab und die Beiträge der magnetischen Kenngrössen sinken. Das sogenannte magneto-elastisch transformatorische Verfahren der Firma DYNAMG macht sich diese Eigenschaften zunutze, um kontaktlos aktuelle Spannungen und Kräfte in vorgespannten Betonteilen oder in stahlbewehrten Brückenelementen zu überwachen. Das Verfahren basiert darauf, dass Stahl, der sich im thermischen Gleichgewicht befindet und keine makroskopische Magnetisierung aufweist, bei einem einwirkenden äusseren Magnetfeld mit einer Drehung seiner Weissschen Bezirke in Richtung des äusseren Magnetfeldvektors reagiert. Diese Domänendrehung wird aber ganz wesentlich vom Spannungszustand beeinflusst, der im überwachten Werkstück herrscht. Das Verfahren ist mit einem relativ hohen Aufwand verbunden und erfordert beispielsweise eine Kalibrierung auf die jeweilige zu überprüfende Stahlsorte. Dieser Aufwand ist bei der Überwachung von Brückenbauteilen oder vorgespannten Betonteilen, beispielsweise im Kraftwerksbau, sicher vertretbar; für massentechnische Anwendungen, wie beispielsweise den automotiven Bereich, ist das Verfahren jedoch nicht geeignet.

Vom deutschen Fraunhofer-Institut für Zerstörungsfreie Prüfverfahren wurde ein elektromagnetisches Prüfverfahren für Spannungen in ferromagnetischen Werkstücken entwickelt, welches unter der Bezeichnung 3MA-Verfahren bekannt ist. Dieses elektromagnetische Verfahren basiert auf der Wechselwirkung der magnetischen Struktur bestehend aus Domänen, deren Bloch Wandbewegungen, der Mikrostruktur und den mechanischen Spannungsfeldern des Werkstoffs. Das 3MA-Verfahren (Mikromagnetische Multiparameter Mikrostruktur und Spannungs-Analyse) nutzt die gleichzeitige Messung und Überlagerung von verschiedenen magnetischen Effekten (Barkhausenrauschsignal, Überlagerungspermeabilität, Oberwelleneigenschaften von frequenzabhängigen Wirbelstrommessgrössen), um Streck- und Zugfestigkeitseingenschaften und -grenzwerte von Werkstücken zu bestimmen. Es muss an Proben mit bekannten Eigenschaften kalibriert werden. Bei entsprechender Kalibrierung können damit auch Härte, Härtetiefe und Eigenspannungen charakterisiert werden. Das 3MA-Verfahren stellt somit eine Kombination mehrerer elektrischer und magnetischer Prüfverfahren dar, aus denen unterschiedliche Messgrössen ermittelt werden können, die in unterschiedlicher Weise auf Spannungs- und Gefügeeinflüsse reagieren. Das Verfahren ist vom Aufbau, von der Auswertung und von der Interpretation her relativ aufwendig und für einen massentauglichen Einsatz kaum geeignet.

Ein weiteres bekanntes Verfahren nutzt das Phänomen der Magnetostriktion, einer Längenänderung eines ferromagnetischen Material unter Magnetfeldeinfluss. Umgekehrt bewirkt eine Längenänderung bedingt durch mechanische Spannungen infolge äusserer Kräfte eine Änderung der magnetischen Parameter des Materials. Die sich ändernde magnetische Permeabilität erlaubt einen Rückschluss auf den inneren mechanischen Spannungszustand eines ferromagnetischen Werkstücks. Die Einprägung des magnetischen Felds und die Messung der Permeabilität erfolgt mit Hilfe von zwei konzentrischen angeordneten Spulen, die in nächster Nähe oder um das ferromagnetische Werkstück herum angeordnet werden. Das Messprinzip beruht auf einer Art Wirbelstrommessung und Auswertung der ermittelten elektrischen Impedanz der Messspule. Das Verfahren wird zur Überwachung der mechanischen Belastungen in Brückenelementen sowie zum Monitoring von kritischen beispielsweise in Atomkraftwerken eingesetzt. Es setzt eine Vormagnetisierung des gemessenen Stahlwerkstücks voraus, die den Sensorarbeitspunkt beeinflussen kann. Das Verfahren ist mit einem hohen apparativen Aufwand verbunden und ist nicht für massentechnische Anwendungen ausgelegt.

Die vorstehend geschilderten Verfahren wurden vor allem für die Prüfung und Überwachung von Spannungszuständen und Spannungsbelastungsgrenzen in vorgespannten Betonteilen oder in stahlbewehrten Brückenelementen entwickelt, bei denen der Aufwand und die Kosten des Messverfahrens eine weniger wichtige Rolle spielen.

Infolge der Automatisierung der Messtechnik besteht jedoch der Wunsch, auch in massentechnischen Anwendungen, wie beispielsweise im automotiven Bereich oder beispielsweise in der Energieerzeugung mittels Windrädern, die mechanischen Spannungsbelastungen bedingt durch Torsions-, Scher-, Biege-, Schub-, Zug- und/oder Druckkräfte in Werkstücken zu überwachen, um abhängig von den gemessenen Spannungswerten die Betriebsparameter anzupassen und zu optimieren.

Eine sehr einfaches Verfahren zur Bestimmung von Spannungszuständen eines Werkstücks nutzt Dehnungsmessstreifen, die auf den Prüfkörper aufgeklebt werden. Mit Hilfe des Dehnungsmessstreifens kann zum Beispiel eine spannungsbedingte Deformation des Werkstücks in eine elektrische Spannung umgeformt werden. Dazu muss der Dehnungsmessstreifen möglichst schlupffrei auf das Werkstück aufgeklebt sein, damit er jeder Dehnung der Oberfläche folgen kann. Geklebte Verbindungen können jedoch infolge von mechanischen Einflüssen, unter der Einwirkung von Feuchte, Verschmutzung und Temperaturänderungen sehr schnell versagen. Davon abgesehen weisen Dehnmessstreifen nur eine relativ geringe Empfindlichkeit auf, was sich in einem kleinen Signal-Rauschverhältnis äussert und den Einsatz von Dehnmessstreifen auf relativ grosse Dehnungen begrenzt.

Zur Überwachung von Spannungen infolge von Drehmomenten an rotierenden Wellen ist es bekannt, der Welle aneinander grenzende Bereiche mit entgegen gesetzter Ausrichtung des Magnetfeldes aufzuprägen. Die Veränderungen der Richtungen der Magnetfelder in den einzelnen Bezirken werden dann mit einem richtungsabhängigen Magnetfeldsensor abgetastet und hinsichtlich der mechanischen Spannungen ausgewertet. Zwar sind mit dieser Methode die auftretenden Drehmomentänderungen gut feststellbar. Jedoch ist der Aufwand für die Aufprägung der Bezirke mit entgegengesetzter Richtung des Magnetfeldes auf die Welle sehr aufwendig und kostspielig.

Aufgabe der vorliegenden Erfindung ist es, den geschilderten Nachteilen der Verfahren und Messanordnungen des Stands der Technik abzuhelfen. Es soll ein Verfahren und eine Messanordnung zur Messung von mechanischen Spannungen bedingt durch Torsions-, Scher-, Biege-, Schub-, Zug- und/oder Druckkräfte in ferromagnetischen Werkstücken geschaffen werden, welche es erlauben, auch kleine Deformationen zuverlässig zu detektieren. Dabei sollen das Verfahren und die Messanordnung auch für massentechnische Anwendungen, wie beispielsweise den automotiven Bereich, anwendbar ist. Zudem soll das Verfahren einfach und kostengünstig durchführbar sein und die Messanordnung einen einfachen und kostengünstigen Aufbau aufweisen.

Die erfindungsgemässe Lösung dieser Aufgaben besteht in einem Verfahren zur Messung von mechanischen Spannungen in ferromagnetischen Werkstücken, wie es im unabhängigen Patentanspruch 1 definiert ist. Weiterbildungen des Verfahrens und/oder vorteilhafte Verfahrensvarianten sowie eine entsprechende Messanordnung und Verwendungen des Verfahrens sind Gegenstand der jeweiligen abhängigen Ansprüche.

Durch die Erfindung wird ein Verfahren zur Messung von mechanischen Spannungen in ferromagnetischen Werkstücken geschaffen, bei dem einem ferromagnetischen Werkstück ein Magnetfeld aufgeprägt und eine Magnetfeldgrösse gemessen und hinsichtlich der mechanischen Spannung ausgewertet wird. Dabei werden wenigstens zwei Erreger des Magnetfelds derart entlang der Oberfläche des Werkstücks angeordnet, dass ein Abschnitt des Werkstücks sich zwischen den beiden Erregern des Magnetfelds befindet. Ein richtungsabhängiger Magnetfeldsensor wird an einer Position entlang der Oberfläche des Werkstücks angeordnet, die etwa auf halber Strecke zwischen den beiden Erregern des Magnetfelds liegt. Mit dem richtungsabhängigen Magnetfeldsensor wird die Veränderung der Lage und/oder der Richtung einer Trennlinie zwischen Nord- und Südpol des Magnetfeldes bestimmt und ausgewertet.

Das erfindungsgemässe Verfahren benötigt für seine Durchführung bloss zwei Erreger für ein Magnetfeld und einen richtungsabhängigen Magnetfeldsensor samt angeschlossener Auswerteeinheit, die bereits in den Magnetfeldsensor integriert sein kann. Das Verfahren nutzt die Abhängigkeiten zwischen mechanischen und magnetischen Eigenschaften von ferromagnetischen Werkstoffen. Bei der mechanischen Belastung des ferromagnetischen Werkstücks, wie sie beispielsweise bei der Einwirkung von Torsions-, Scher-, Biege-, Schub-, Zug- und/oder Druckkräften auftritt, und dessen erzwungener geometrischen Deformation ändern sich seine magnetischen Eigenschaften und magnetischen Parameter. Der richtungsabhängige Magnetfeldsensor erfasst die Verschiebung der Grenze zwischen Nord- und Südpol des aufgeprägten Magnetfeldes bzw. die Richtungsänderung des Magnetfeldvektors. Die Messwerte werden ausgewertet, um daraus die mechanische Spannung im Werkstück zu bestimmen. Dabei wird die Materialart, die Art der Legierung usw. durch Vergleich mit empirisch ermittelten Werten berücksichtigt und der ermittelten Spannungswert entsprechend korrigiert.

Die Anordnung der Erreger für das Magnetfeld erfolgt zweckmässigerweise derart, dass sie in Längsrichtung des ferromagnetischen Werkstücks eine Abstand voneinander aufweisen. Zusätzlich können die Erreger für das Magnetfeld auch noch einen Winkelabstand voneinander aufweisen.

Das Verfahren kann bereits mit nur zwei Erregern für das Magnetfeld und mit einem dazwischen angeordneten richtungsabhängigen Magnetfeldsensor durchgeführt werden. Um die Aussage über die im Werkstück herrschenden Spannungen noch weiter zu verbessern sieht eine Ausführungsvariante der Erfindung vor, n Erreger für das Magnetfeld derart im Abstand voneinander entlang der Längserstreckung des Werkstücks anzuordnen, dass am Werkstück Abschnitte mit umgekehrter Ausrichtung des aufgeprägten Magnetfelds entstehen. Dazu wird eine Anzahl von n - 1 richtungsabhängigen Magnetfeldsensoren immer jeweils etwa auf halber Strecke zwischen zwei aufeinander folgenden Erregern des Magnetfelds angeordnet. Die von den n - 1 richtungsabhängigen Magnetfeldsensoren gemessenen Signale werden zur Ermittlung des Spannungszustands des Werkstücks miteinander verknüpft.

Eine Variante der Erfindung sieht vor, dass als Erreger für das Magnetfeld Permanentmagnete verwendet werden. Permanentmagnete sind kostengünstig und können bei Verwendung der entsprechenden Materialien trotz kleiner Bauart eine relativ hohe Magnetfeldstärke erzeugen. Beispielsweise werden als Permanentmagnete Magnete aus SmₓCo_{y}, Ferrit, NdFeB oder kunststoffgebundene Magnete verwendet.

In einer weiteren Variante des erfindungsgemässen Verfahrens sind die Erreger für das Magnetfeld, beispielsweise die Permanentmagnete, fest mit dem Werkstück verbunden. Diese Variante ist insbesondere für statische bzw. stationäre Werkstücke praktisch, beispielsweise bei Spurstangen von Kraftfahrzeugen, bei Spannstählen in der Bauindustrie oder bei stahlbewehrten Betonteilen. Die Verbindung der Permanentmagnete mit dem Werkstück erfolgt vorzugsweise stoffschlüssig, insbesondere durch Aufkleben, Auflöten oder Aufschweissen. Bei fest mit der Oberfläche des Werkstücks verbundenen Permanentmagneten ist das erfindungsgemässe Verfahren sogar an nicht-ferromagnetischen Werkstücken durchführbar.

Eine alternative Ausführungsvariante der Erfindung sieht vor, dass die n Erreger für das Magnetfeld und die n - 1 Sensoren in einem gemeinsamen Gehäuse angeordnet sind, welches für eine berührungslose Messung der mechanischen Spannungen in unmittelbarer Nachbarschaft zum ferromagnetischen Werkstück angeordnet wird. Auf diese Weise ist das erfindungsgemässe Verfahren mittels eines Messgeräts durchführbar, dessen geometrische Auslegung an die jeweilige spezielle Anwendung angepasst ist. Vorzugsweise sind Bestandteile des Gehäuses austauschbar oder ist die Anordnung der Erreger für das Magnetfeld und der richtungsabhängigen Magnetfeldsensoren innerhalb des Gehäuses veränderbar, um das Messgerät an die speziellen Anforderungen anzupassen.

Anstelle der Permanentmagneten kann als Erreger für das Magnetfeld auch jeweils eine Quelle für ein elektromagnetisches Gleichfeld eingesetzt werden. Dies können beispielsweise von Gleichstrom durchflossene Leiter bzw. Leiterschleifen sein, die in nächster Nähe zum Werkstück angeordnet werden.

Eine weitere Ausführungsvariante der Erfindung sieht vor, dass den elektromagnetischen Gleichfeldern ein elektromagnetisches Wechselfeld überlagert wird. Zur Bestimmung der mechanischen Spannungen im ferromagnetischen Werkstoff werden zusätzlich zu der Veränderung der Richtung der Trennlinie zwischen Nord- und Südpol des Magnetfeldes dessen Permeabilität und/oder dessen differentielle Permeabilität und/oder dessen Überlagerungspermeabilität und/oder die Amplitudenänderung des Magnetfeldes und/oder das Schwingungsverhalten der Magnetfeldänderung gemessen. Die Überlagerung von magnetischem Gleichfeld und magnetischem Wechselfeld erweitert das Spektrum der erfassbaren Messgrössen, aus denen auf Materialparameter und auf den jeweiligen mechanischen Spannungszustand zurückgeschlossen werden kann.

Prinzipiell kann das erfindungsgemässe Verfahren mit dem erfindungsgemässen Messaufbau mit den verschiedensten Arten von Magnetfeldsensoren durchgeführt werden, um aus den Messwerten auf unterschiedliche Materialparameter zurück zu schliessen. Für die Bestimmung der mechanischen Spannungen bedingt durch Torsions-, Scher-, Biege-, Schub-, Zug- und/oder Druckkräfte in ferromagnetischen Werkstücken erweist es sich jedoch als zweckmässig, wenn als richtungsabhängige Magnetfeldsensoren Sensoren aus der Gruppe bestehend aus Förstersonden, Spulen mit Ferritkern, Hallsensoren und magnetoresistiven Sensoren eingesetzt werden.

Wegen des einfachen und robusten Messaufbaus eignet sich das erfindungsgemässe Verfahren insbesondere für Anwendungen im automotiven Bereich. Beispielsweise kann das Verfahren zur laufenden Steuerradüberwachung eingesetzt werden, um dem Lenker durch einen entsprechenden Eingriff in die Servounterstützung des Lenkvorgangs die gewünschte Kraftrückmeldung zu liefern. Das Verfahren kann auch zur laufenden Feinregulierung der Fahrwerksabstimmung eines Fahrzeugs eingesetzt werden, indem beispielsweise die Spannungen in den Spurstangen oder Stabilisatoren eines Kraftfahrzeugs überwacht werden und je nach den gemessenen Spannungswerten die Stossdämpfereigenschaften angepasst werden. Auf diese Weise können die Fahrwerkseigenschaften sehr einfach und schnell an die jeweiligen aktuellen Anforderungen angepasst werden. Eine weitere Anwendung des erfindungsgemässen Verfahrens im automotiven Bereich besteht in der laufenden Überwachung des Antriebsstrangs, um das im Getriebe auftretende Drehmoment zu optimieren.

Das erfindungsgemässe Verfahren mit der erfindungsgemässen Messanordnung kann auch für die Überwachung der mechanischen Spannungen in einer rotierenden Welle eingesetzt werden. In diesem Fall ersetzt die erfindungsgemässe Anordnung der Erreger für das Magnetfeld die Verwendung von magnetisch kodierten Wellen. Eine beispielsweise Anwendung stellt die Überwachung des Drehmoments von Bohrgeräten oder von Schraubgeräten dar. Einerseits kann dadurch das Drehmoment optimiert werden, andererseits erlaubt es das erfindungsgemässe Verfahren bei Schraubgeräten jede Schraube mit nur minimalen Drehmomentschwankungen festzuziehen.

Neben Anwendungen im automotiven Bereich kann das erfindungsgemässe Verfahren beispielsweise auch zur Überwachung der mechanischen Spannungen in Komponenten von Windrädern eingesetzt werden. Weitere Anwendungen betreffen die Überwachung von Spannungszuständen in vorgespannten Stahlstrukturen, beispielsweise von Brücken oder Gebäuden, in armierten Betonbauteilen u.v.a.m. Weitere Vorteile und Merkmale der Erfindung ergeben sich aus der nachfolgenden Beschreibung von Prinzipdarstellungen zur Erläuterung des erfindungsgemässen Verfahrens. Es zeigen in nicht massstabsgetreuer schematischer Darstellung:
- Fig. 1: eine schematische Darstellung eines Werkstücks mit zwei daran befestigten Permanentmagneten und einem richtungsabhängigen Magnetfeldsensor;
- Fig. 2: das Werkstück mit der Messanordnung gemäss Fig. 1 unter Druckbelastung;
- Fig. 3: das Werkstück mit einer Messanordnung analog Fig. 1 unter Torsionsbelastung;
- Fig. 4: eine schematische Darstellung einer modifizierten Anordnung von zwei Permanentmagneten und einem richtungsabhängigen Magnetfeldsensor;
- Fig. 5: eine weitere Variante der Anordnung von Permanentmagneten und richtungsabhängigen Magnetfeldsensoren an einem Werkstück;
- Fig. 6: das Werkstück mit der Messanordnung gemäss Fig. 5 unter Druckbelastung; und
- Fig. 7a - 7c und Fig. 8a - 8b: weitere Varianten von Messanordnungen zur Durchführung des erfindungsgemässen Verfahrens.

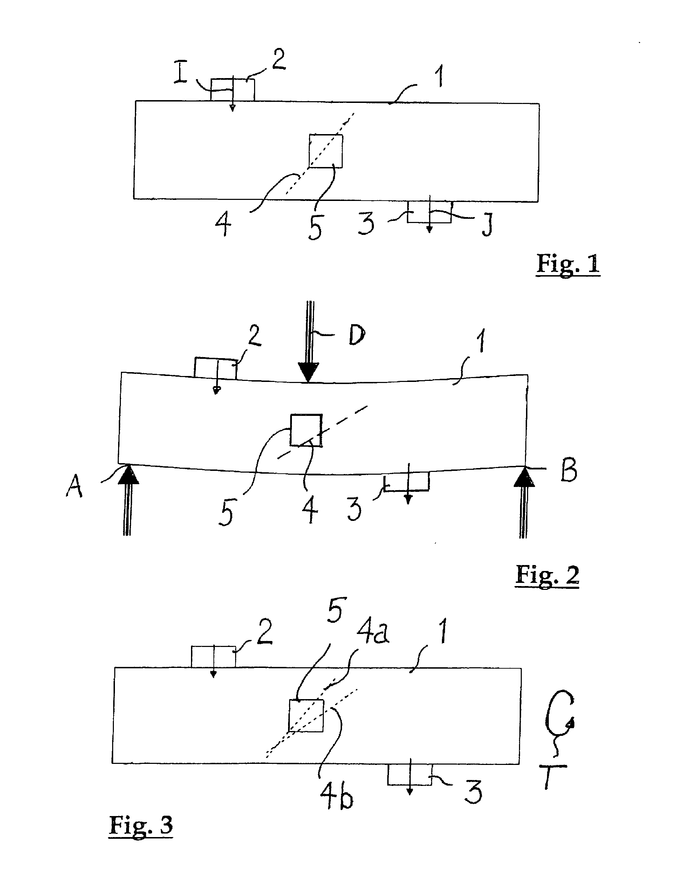

Die schematische Darstellung in Fig. 1 zeigt einen Abschnitt eines Werkstücks 1 aus einem ferromagnetischen Material, beispielsweise eine Welle aus Stahl. An der Ober- und an der Unterseite des Werkstücks 1 sind entlang dessen Längserstreckung in einem Abstand voneinander zwei Permanentmagnete 2, 3 angeordnet, deren Magnetisierungsrichtung durch die Pfeile I und J angegeben ist. Die Permanentmagnete 2, 3 sind beispielsweise Magnete aus SmₓCo_{y}, Ferrit, NdFeB oder kunststoffgebundene Magnete. Anstelle der Permanentmagnete kann auch eine Quelle für ein elektromagnetisches Gleichfeld vorgesehen sein. Beispielsweise können an Stelle der Permanentmagnete auch von Gleichstrom durchflossene Leiter angeordnet werden. Die Magnetisierungsrichtung I, J der beiden Permanentmagnete 2, 3 verläuft gemäss dem dargestellten Ausführungsbeispiel senkrecht zur Längserstreckung des ferromagnetischen Werkstücks 1. Die Permanentmagnete könnten aber auch derart angeordnet sein, dass ihre Magnetisierungsrichtung parallel zur Längserstreckung des ferromagnetischen Werkstücks verläuft. Ungefähr auf halber Strecke zwischen den beiden Permanentmagneten 2, 3 ist ein richtungsabhängiger Magnetfeldsensor 5 angeordnet. Der Magnetfeldsensor 5 ist beispielsweise ein Hallsensor. Anstelle eines Hallsensors könnte aber auch eine Förstersonde, eine Spule mit Ferritkern oder ein magnetoresistiven Sensor eingesetzt werden. Der Magnetfeldsensor 5 dient zur Detektion der Position und/oder der Ausrichtung einer Grenze zwischen dem Südpol und dem Nordpol des von den beiden Permanentmagneten 2, 3 dem ferromagnetischen Werkstück aufgeprägten Magnetfelds, die in Fig. 1 mit den Bezugszeichen 4 versehen ist.

Fig. 2 zeigt das ferromagnetische Werkstück 1 mit der Messanordnung (Permanentmagnete 2, 3 und Magnetfeldsensor 5) gemäss Fig. 1 unter Druckbelastung, die in Fig. 2 durch den Pfeil D angedeutet ist. Die beiden Auflager an der Unterseite des Werkstücks 1 sind mit den Bezugszeichen A bzw. B versehen. Gleiche Bauelemente tragen jeweils die gleichen Bezugszeichen wie in Fig. 1. Unter der mechanischen Druckbelastung und der dadurch erzwungenen geometrischen Deformation ändern sich die magnetischen Eigenschaften und magnetischen Parameter des ferromagnetischen Werkstücks 1. Dies äussert sich darin, dass sich die Grenze 4 zwischen Nord- und Südpol des von den Permanentmagneten 2, 3 aufgeprägten Magnetfeldes räumlich verschiebt und/oder seine Richtung ändert. Diese räumliche Verschiebung bzw. Drehung wird mit dem richtungsabhängigen Magnetfeldsensor 5 detektiert. Die gemessenen Werte werden mit an sich bekannten Algorithmen, beispielsweise Impedanzmessung, LC Schwingkreis, RL Schwingkreis, Transformatoren Kopplungsmessung, usw., ausgewertet, um daraus auf die mechanischen Spannungen im Werkstück 1 zurückzuschliessen. Dabei wird die Materialart, die Art der Legierung usw. durch Vergleich mit empirisch ermittelten Werten berücksichtigt und der ermittelten Spannungswert entsprechend korrigiert.

Fig. 3 zeigt das ferromagnetische Werkstück 1 mit der Messanordnung gemäss Fig. 1 unter einer Torsionsbelastung, die in Fig. 3 durch den gekrümmten Pfeil T angedeutet ist. Gleiche Bauelemente tragen wiederum die gleichen Bezugszeichen wie in Fig. 1. Mit den beiden strichlierten Linien 4a und 4b sind die räumliche Verschiebung und Drehung der Richtung der Grenze zwischen Nord- und Südpol des von den beiden Permanentmagneten 2, 3 dem Werkstück 1 aufgeprägten Magnetfelds dargestellt. Die Linie 4a gibt dabei den Zustand ohne mechanische Belastung wieder, während die Linie 4b den Verlauf der Grenze bei Torsionsbelastung T andeutet. Die räumliche Verschiebung bzw. Drehung der Grenze zwischen Nord- und Südpol des Magnetfelds wird wiederum mit dem richtungsabhängigen Magnetfeldsensor 5 detektiert, um aus den Messwerten die im Werkstück 1 herrschenden mechanischen Spannungen zu ermitteln.

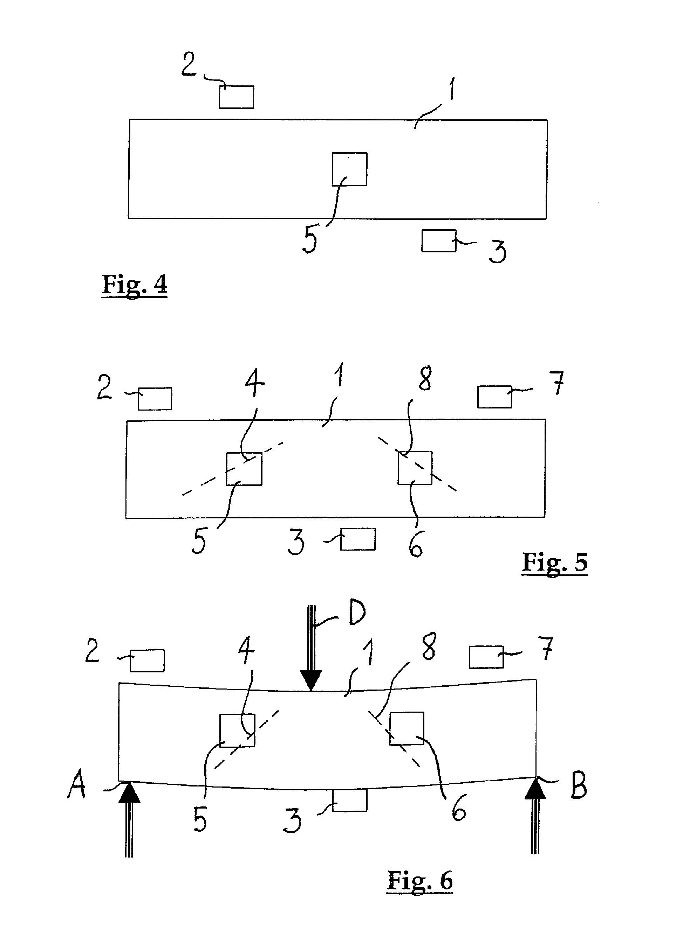

Die Messanordnung (Permanentmagnete 2, 3 und richtungsabhängiger Magnetfeldsensor 5) können, wie in Figs. 1 - 3 angedeutet, fest mit dem ferromagnetischen Werkstück 1 verbunden, beispielsweise aufgeklebt, aufgelötet oder aufgeschweisst, sein. In einer alternativen Ausführungsvariante der Messanordnung, die in Fig. 4 angedeutet ist, weisen die Permanentmagnete 2, 3 und der richtungsabhängige Magnetfeldsensor 5 einen geringen Abstand vom ferromagnetischen Werkstück 1 auf. In einer weiteren Ausführungsvariante, die nicht separat dargestellt ist, ist die Messanordnung innerhalb eines Gehäuses angeordnet, welches für das Messverfahren in unmittelbarer Nähe des ferromagnetischen Werkstücks angeordnet wird. Dabei können die Bestandteile des Gehäuses austauschbar sein, oder ist die Anordnung der Permanentmagnete und der richtungsabhängigen Magnetfeldsensoren innerhalb des Gehäuses veränderbar, um die Messanordnung an die speziellen Anforderungen anzupassen. Mit einer Messanordnung gemäss Fig. 4 bzw. mit einer in einem Gehäuse angeordneten Messanordnung ist ein berührungsloses Messverfahren ermöglicht.

Fig. 5 zeigt ein ferromagnetisches Werkstück, das wiederum das Bezugszeichen 1 trägt, mit einer Messanordnung, die drei Permanentmagnete 2, 3, 7 und zwei richtungsabhängige Magnetfeldsensoren 5, 6 umfasst. Zwei Permanentmagnete 2, 7 sind an der Oberseite des Werkstücks 1 angeordnet, ein Permanentmagnet 3 befindet sich an der Unterseite des Werkstücks 1. Die abwechselnd an der Oberseite und an der Unterseite des Werkstücks 1 angeordneten Permanentmagnete weisen etwa den gleichen Abstand voneinander auf. Die jeweils paarweise zusammenwirkenden Permanentmagnete 2, 3 bzw. 3, 7 definieren am Werkstück 1 Abschnitte, in denen eine Grenze 4 bzw. 8 zwischen dem Nord- und dem Südpol des aufgeprägten Magnetfelds eine entgegengesetzte Richtung bzw. Steigung aufweist. Die jeweilige Grenze 4 bzw. 8 zwischen dem Nordpol und dem Südpol des dem Werkstück 1 aufgeprägten Magnetfelds verläuft etwa auf halben Weg zwischen einem Paar von Permanentmagneten 2, 3 bzw. 3, 7. Ungefähr in diesem Bereich sind jeweils ein richtungsabhängiger Magnetfeldsensor 5 bzw. 6 angeordnet. Wie in Fig. 5 angedeutet, weisen die Komponenten der Messanordnung (Permanentmagnete 2, 3, 7 und Magnetfeldsensoren 5, 6) einen geringen Abstand zu dem Werkstück 1 auf, um eine berührungslose Messung zu erlauben.

Fig. 6 zeigt das ferromagnetische Werkstück 1 mit der Messanordnung gemäss Fig. 5 unter Druckbelastung, die in Fig. 6 durch den Pfeil D angedeutet ist. Die Pfeile A und B bezeichnen jeweils Auflager an der Unterseite des Werkstücks 1. Unter der mechanischen Druckbelastung D und der dadurch erzwungenen geometrischen Deformation ändern sich die magnetischen Eigenschaften und magnetischen Parameter des ferromagnetischen Werkstücks 1. Infolge der Durchbiegung des Werkstücks 1 ändert sich auch der Abstand der Permanentmagnete 2, 3, 7 vom Werkstück. Daraus resultiert eine räumliche Verschiebung und/oder Drehung der Grenze 4 bzw. 8 zwischen Nord- und Südpol des von einem zusammengehörigen Paar von Permanentmagneten 2, 3 bzw. 3, 7 im jeweiligen Abschnitt des Werkstücks 1 aufgeprägten Magnetfelds. Diese räumliche Verschiebungen bzw. Drehungen der Grenzen zwischen Nord- und Südpol des Magnetfelds werden mit den richtungsabhängigen Magnetfeldsensoren 5, 6 detektiert. Die gemessenen Werte werden wiederum mit den an sich bekannten Algorithmen ausgewertet, um daraus auf die mechanischen Spannungen im Werkstück 1 bzw. in den einzelnen Abschnitten zurückzuschliessen. Dabei kann wiederum die Materialart, die Art der Legierung usw. durch Vergleich mit empirisch ermittelten Werten berücksichtigt und der ermittelten Spannungswert entsprechend korrigiert werden.

Die Messanordnung ist nicht auf die in den Fig. 1 - 6 beispielsweise dargestellte Anzahlen von Permanentmagneten und richtungsabhängigen Magnetfeldsensoren beschränkt. Ganz allgemein können entlang eines ferromagnetischen Werkstücks n Permanentmagnete im Abstand voneinander angeordnet werden, wobei jeweils ein Paar von Permanentmagneten einem Abschnitt des Werkstücks ein Magnetfeld bestimmter Ausrichtung aufprägt. Der daraus resultierenden Anzahl von n - 1 Abschnitten des Werkstücks wird eine korrespondierende Anzahl von n - 1 richtungsabhängigen Magnetfeldsensoren zugeordnet, mit denen die Änderung der Ausrichtung des Magnetfeldes in den entsprechenden Abschnitten detektierbar ist, um daraus für jeden Abschnitt des Werkstücks die mechanischen Spannungen zu ermitteln.

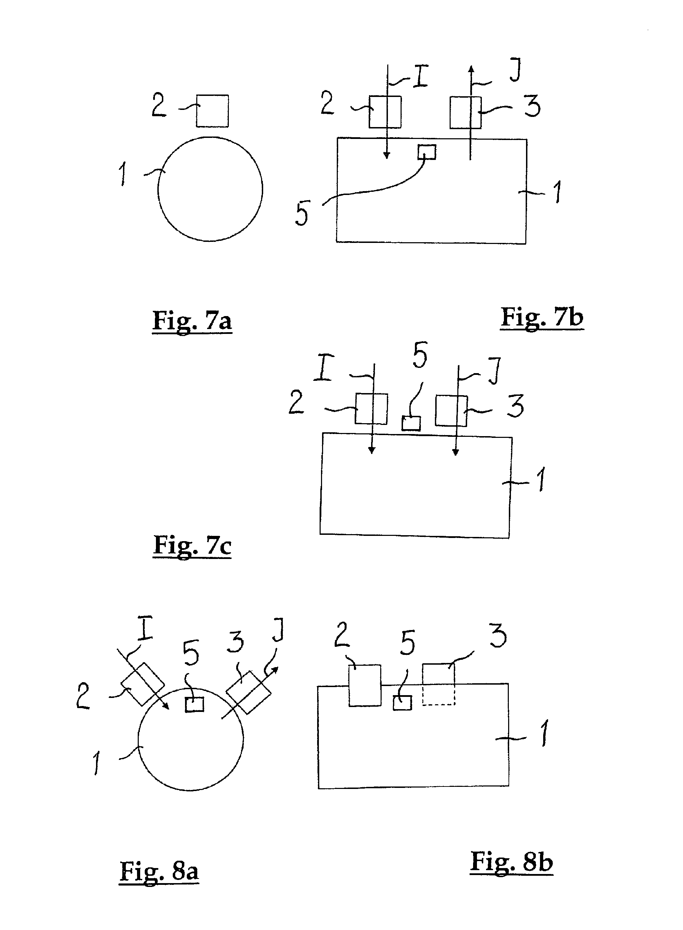

Fig. 7a und Fig. 7b zeigen zwei Ansichten einer weiteren Variante einer Anordnung von Permanentmagneten 2, 3 und eines richtungsabhängigen Magnetfeldsensors 5 entlang eines ferromagnetischen Werkstücks, das wiederum das Bezugszeichen 1 trägt. Wie insbesondere Fig. 7b zeigt, sind beide Permanentmagnete 2, 3 in einem Abstand voneinander entlang der Längserstreckung des Werkstücks 1 an dessen Oberseite angeordnet. Der richtungsabhänge Magnetfeldsensor wird zweckmässigerweise etwa auf halbem Weg zwischen den beiden Magnetfeldsensoren 2, 3 plaziert. Die beiden Permanentmagnete 2, 3 sind beispielsweise derart angeordnet, dass ihre Magnetisierungsrichtungen I, J entgegengesetzt verlaufen.

In einer alternativen Messanordnung, die in Fig. 7c angedeutet ist, werden die beiden Permanentmagnete 2, 3 derart angeordnet, dass ihre Magnetisierungsrichtungen I, J in die gleiche Richtung weisen.

Fig. 8a und 8b zeigen zwei Ansichten einer weiteren Variante einer Messanordnung für die Durchführung des erfindungsgemässen Verfahrens. Zusätzlich zum Abstand voneinander entlang der Längserstreckung des wiederum mit dem Bezugszeichen 1 versehenen ferromagnetischen Werkstücks weisen die beiden Permanentmagnete 2 und 3 auch noch einen Winkelabstand voneinander auf. Die Magnetisierungsrichtungen der beiden Permanentmagnete 2, 3 sind mit den Bezugszeichen I, J angedeutet. Der richtungsabhängige Magnetfeldsensor 5 ist wiederum vorzugsweise etwa auf halbem Weg zwischen den beiden Permanentmagneten 2, 3 angeordnet.

Bei den in den Fig. 7a - 7c bzw. 8a - 8b dargestellten Messanordnungen können die Permanentmagnete wiederum fest mit der Oberfläche des Werkstücks verbunden sein oder sie können, wie dargestellt, in nächster Nähe zu dessen Oberfläche plaziert werden. Alternativ können die Permanentmagnete und der richtungsabhängige Magnetfeldsensor auch in einem separaten Gehäuse angeordnet werden, das zur Durchführung der Messung in unmittelbarer Nähe des Werkstücks angeordnet wird.

Das erfindungsgemässe Verfahren ist mit einer sehr einfach aufgebauten Messanordnung durchführbar und in verschiedensten Anwendungen einsetzbar. Beispiele dafür sind der automotive Bereich, die Überwachung von Spannungen in Vorspannelementen von Brücken und Gebäuden, die Optimierung und Kontrolle von Drehmomenten an rotierenden Bauteilen bei Motoren, Bohr- und Schraubgeräten u.v.a.m.

## Patentansprüche

1. Verfahren zur Messung von mechanischen Spannungen in ferromagnetischen Werkstücken, bei dem einem ferromagnetischen Werkstück (1) ein Magnetfeld aufgeprägt und eine Magnetfeldgrösse gemessen und hinsichtlich der mechanischen Spannung ausgewertet wird, **dadurch gekennzeichnet, dass** wenigstens zwei Erreger des Magnetfelds (2, 3, 7) derart entlang der Oberfläche des Werkstücks (1) angeordnet werden, dass ein Abschnitt des Werkstücks (1) sich zwischen den beiden Erregern (2, 3; 3, 7) des Magnetfelds befindet, ein richtungsabhängiger Magnetfeldsensor (5, 6) an einer Position entlang der Oberfläche des Werkstücks (1) angeordnet wird, die vorzugsweise etwa auf halber Strecke zwischen den beiden Erregern des Magnetfelds (2, 3; 3, 7) liegt, und mit dem richtungsabhängigen Magnetfeldsensor (5, 6) die Veränderung der Lage und/oder der Richtung einer Trennlinie (4; 8) zwischen Nord- und Südpol des Magnetfelds bestimmt und ausgewertet wird.

2. Verfahren nach Anspruch 1, **dadurch gekennzeichnet, dass** die Erreger des Magnetfelds (2, 3, 7) derart entlang der Oberfläche des ferromagnetischen Werkstücks (1) angeordnet werden, dass sie in Richtung der Längserstreckung des ferromagnetischen Werkstücks (1) einen Abstand voneinander aufweisen.

3. Verfahren nach Anspruch 1 oder 2, **dadurch gekennzeichnet, dass** n Erreger eines Magnetfeldes (2, 3, 7) derart im Abstand voneinander entlang der Längserstreckung des Werkstücks (1) angeordnet werden, dass am Werkstück (2) Abschnitte mit umgekehrter Ausrichtung des aufgeprägten Magnetfelds entstehen, und eine Anzahl von n - 1 richtungsabhängigen Magnetfeldsensoren (5, 6) immer jeweils etwa auf halber Strecke zwischen zwei aufeinander folgenden Erregern des Magnetfelds (2, 3; 3, 7) angeordnet werden, wobei die von den richtungsabhängigen Magnetfeldsensoren (5, 6) gemessenen Signale zur Ermittlung des Spannungszustands des Werkstücks miteinander verknüpft werden.

4. Verfahren nach einem der Ansprüche 1 bis 3, **dadurch gekennzeichnet, dass** als Erreger für das Magnetfeld (2, 3, 7) Permanentmagnete verwendet werden.

5. Verfahren nach Anspruch 4, **dadurch gekennzeichnet, dass** als Permanentmagnete Magnete aus SmₓCo_{y}, Ferrit, NdFeB oder kunststoffgebundene Magnete verwendet werden.

6. Verfahren nach einem der vorangehenden Ansprüche, **dadurch gekennzeichnet, dass** die Erreger für das Magnetfeld (2, 3) permanent mit dem ferromagnetischen Werkstück (1) verbunden sind.

7. Verfahren nach Anspruch 6, **dadurch gekennzeichnet, dass** die Erreger für das Magnetfeld (2, 3) stoffschlüssig mit dem Werkstück (1) verbunden, insbesondere aufgeklebt, aufgelötet oder aufgeschweisst, werden.

8. Verfahren nach einem der Ansprüche 1 bis 5, **dadurch gekennzeichnet, dass** die n Erreger für das Magnetfeld und die n - 1 richtungsabhängigen Magnetfeldsensoren in einem gemeinsamen Gehäuse angeordnet sind, welches für eine berührungslose Messung der mechanischen Spannungen in unmittelbarer Nachbarschaft zum ferromagnetischen Werkstück angeordnet wird.

9. Verfahren nach einem der Ansprüche 1 bis 3, **dadurch gekennzeichnet, dass** als Erreger für das Magnetfeld jeweils eine Quelle für ein elektromagnetisches Gleichfeld eingesetzt wird.

10. Verfahren nach Anspruch 9, **dadurch gekennzeichnet, dass** den elektromagnetischen Gleichfeldern ein elektromagnetisches Wechselfeld überlagert wird, und zur Bestimmung der mechanischen Spannungen im ferromagnetischen Werkstoff dessen Permeabilität und/oder dessen differentielle Permeabilität und/oder dessen Überlagerungspermeabilität und/oder die Amplitudenänderung des Magnetfeldes und/oder das Schwingungsverhalten der Magnetfeldänderung gemessen wird.

11. Verfahren nach einem der vorangehenden Ansprüche, **dadurch gekennzeichnet, dass** als richtungsabhängige Magnetfeldsensoren (5, 6) Sensoren aus der Gruppe bestehend aus Förstersonden, Spulen mit Ferritkern, Hallsensoren und magnetoresistiven Sensoren eingesetzt werden.

12. Verwendung des Verfahrens nach einem der Ansprüche 1 bis 11 im automotiven Bereich.

13. Verwendung des Verfahrens nach einem der Ansprüche 1 bis 11 zur laufenden Steuerradüberwachung, zur laufenden Feinregulierung der Fahrwerksabstimmung eines Fahrzeugs oder zur Drehmomentoptimierung im Getriebe eines Kraftfahrzeugs.

14. Verwendung des Verfahrens nach einem der Ansprüche 1 bis 11 zur Überwachung der mechanischen Spannungen in einer rotierenden Welle.

15. Verwendung des Verfahrens nach einem Anspruch 1 bis 11 zur Überwachung der mechanischen Spannungen in Komponenten von Windrädern.

16. Messanordnung zur Durchführung des Verfahrens gemäss einem der Patentansprüche 1 bis 11 umfassend wenigstens zwei Erreger (2, 3, 7) für ein Magnetfeld, die im Abstand voneinander angeordnet sind, und wenigstens einen richtungsabhängigen Magnetfeldsensor (4, 5), der vorzugsweise etwa auf halbem Weg zwischen den wenigstens zwei Erregern (2, 3, 7) für das Magnetfeld angeordnet ist.

17. Messanordnung nach Anspruch 16, **dadurch gekennzeichnet, dass** die Erreger für das Magnetfeld Permanentmagnete sind.

18. Messanordnung nach Anspruch 16 oder 17, **dadurch gekennzeichnet, dass** der wenigstens eine richtungsabhängige Magnetfeldsensor (5, 6) ein Sensor aus der Gruppe bestehend aus Förstersonden, Spulen mit Ferritkern, Hallsensoren und magnetoresistiven Sensoren ist.
